(19) Europäisches Patentamt
European Patent Office
Office européen des brevets

(11) EP 3 778 738 B1

(12) # EUROPEAN PATENT SPECIFICATION

(45) Date of publication and mention of the grant of the patent:
**08.06.2022 Bulletin 2022/23**

(21) Application number: **20191400.9**

(22) Date of filing: **17.08.2020**

(51) International Patent Classification (IPC):
***C08J 9/00*** *(2006.01)* ***C08J 9/06*** *(2006.01)*
***C08J 9/08*** *(2006.01)*

(52) Cooperative Patent Classification (CPC):
**C08J 9/0028; C08J 9/06; C08J 9/08;** C08J 9/0061; C08J 2203/02; C08J 2323/08; C08J 2423/08

(54) **THERMALLY EXPANDABLE COMPOSITIONS COMPRISING A CHEMICAL BLOWING AGENT**

THERMISCH EXPANDIERBARE ZUSAMMENSETZUNGEN ENTHALTEND EIN CHEMISCHES TREIBMITTEL

COMPOSITIONS EXPANSIBLES THERMIQUEMENT COMPRENANT UN AGENT DE SOUFFLAGE CHIMIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **15.08.2019 EP 19191988**

(43) Date of publication of application:
**17.02.2021 Bulletin 2021/07**

(60) Divisional application:
**22169985.3**

(73) Proprietor: **SIKA TECHNOLOGY AG**
**6340 Baar (CH)**

(72) Inventors:
- **Paripovic, Dusko**
  **8049 Zürich (CH)**
- **Bordeanu, Nicolae**
  **8400 Winterthur (CH)**
- **Zingraff, Loic**
  **8057 Zürich (CH)**

(74) Representative: **Sika Patent Attorneys**
**c/o Sika Technology AG**
**Corp. IP Dept.**
**Tüffenwies 16**
**Postfach**
**8048 Zürich (CH)**

(56) References cited:
**EP-A1- 3 281 970 WO-A1-2010/014565**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 778 738 B1

## Description

### Technical field

The present invention relates to thermally expandable compositions and use thereof for providing baffle and/or reinforcement elements. Such elements are particularly suitable for use in sealing, baffling, and/or reinforcing of hollow structures, for example cavities in a hollow structural part of an automotive vehicle.

### Background of the invention

Manufactured products often contain orifices and cavities or other hollow parts that result from the manufacturing process and/or that are designed into the product for various purposes, such as weight reduction. Automotive vehicles, for example, include several such orifices and cavities throughout the vehicle, including those in the vehicle's structural pillars and in the sheet metal of the vehicle doors. It is often desirable to seal such orifices and cavities so as to minimize noise, vibrations, fumes, dirt, water, humidity, and the like from passing from one area to another within the vehicle by means of sealing members or baffle elements built into the orifice or cavity. Likewise, such members or elements often fulfil an additional task of reinforcing the hollow structure of the manufactured product, for example an automotive part, so much that it becomes more resistant to mechanical stress but still maintains the low weight advantage of the hollow structure.

Such elements used for sealing, baffling or reinforcing often consist of a carrier, made of plastic, metal, or another rigid material, and one or more layers of a thermoplastic material attached to it which is able to expand its volume when heat or another physical or chemical form of energy is applied, but they can also be entirely made of expandable material. Using an adequate design, it is possible to insert the baffle or reinforcement element into the hollow part of the structure during the manufacturing process but also to leave the inner walls of the structure still accessible (or the cavities passable) by for example a liquid. For example, during the manufacture process of a vehicle, the hollow parts of a metal frame can still be largely covered by an electro-coating ("e-coat") liquid while the baffle or reinforcement elements are already inserted, and afterwards during a heat treatment step, the expandable thermoplastic material of the baffle or reinforcement element expands to fill the cavities as intended.

The development of such baffles or reinforcement elements has led to highly advanced systems, where the expandable material is able to increase its volume by up to several hundred percent, forming a stable, cross-linked foam-like structure that fills the cavities and adhering to the walls of the structure intended to be sealed, baffled, or reinforced. Especially in automotive manufacturing, this has led to considerable weight reduction and excellent dampening of noise or vibrations in the car body.

Currently employed thermally expandable compositions often consist of polymers such as ethylene-vinyl acetate polymers that can be cross-linked by radical initiators, most commonly peroxides. In order to obtain foams, these compositions furthermore contain blowing agents, the most widely used being azodicarbonamide (also called azodicarboxamide or azobisformamide) and 4,4'-oxydibenzenesulfonyl hydrazide (abbreviated OBSH). Under activation conditions, such as elevated temperature, curing of the cross-linkable network takes place, while simultaneously the blowing agent decomposes and releases gases. This leads to the above mentioned volume expansion and the formation of a stable foam, which in ideal cases fills the cavity as intended and adheres to its walls. Such a system is for example disclosed in DE 10 2011 080 223 A1 or US 2018/215888 A1.

While these standard expandable compositions have been optimized sufficiently into highly advanced products, they still suffer from significant drawbacks inherent to their radical chemistry curing mechanisms. The peroxide initiators are activated at elevated temperatures and therefore limit the storage stability of compositions containing such compounds, as they decompose slowly over time even at ambient temperatures, a problem which becomes more severe in hot climates or under non-ideal storage conditions. Furthermore, due to their oxidizing nature, peroxides can cause oxidation side reactions in the composition itself and the surrounding substrate on which they are used, potentially leading to damages and deteriorations. Such reactions have to be inhibited or moderated by use of expensive antioxidants that cause a significant cost burden on the formulation of the expandable compositions.

Another problem in connection with the established solutions described above is the fact that the most commonly used exothermic blowing agents, in particular azodicarbonamide (ADCA), are increasingly facing regulatory problems regarding health and safety issues.

It is thus desirable to obtain a thermally expandable thermoplastic composition that overcomes the above discussed problems related to State-of-the-Art compositions.

### Summary of the invention

The object of the present invention is to provide a storage-stable thermally expandable composition that is able

to expand uniformly and to cure to form a stable foam structure over a wide range of temperatures, for example, in the range of 120 and 200°C. Furthermore, the produced foam should exhibit decreased water uptake and good adhesion to metallic, even oily, surfaces and other substrates commonly used in manufactured articles, in particular automotive vehicles.

Another object of the present invention is to provide a thermally expandable and cross-linkable composition without the use of free-radical initiators, in particular organic peroxides.

Still another object of the present invention is to provide a thermally expandable composition without the use of exothermic blowing agents, in particular azodicarbonamide (ADCA).

The subject of the present invention is a thermally expandable composition as defined in claim 1.

It was surprisingly found out that by using dihydrazides the volume expansion rates and water absorption properties of a thermally expandable composition comprising at least one epoxy-functional polymer can be simultaneously improved. Furthermore, it was surprisingly found out that dihydrazides can be used as activators for chemical blowing agents, in particular for endothermic chemical blowing agents.

One of the advantages of the thermally expandable composition is that since the cross-linking of the composition is based on another type of curing chemistry than free-radical curing chemistry, the composition can be provided fee of free-radical initiators, in particular free of organic peroxides. Consequently, the thermally expandable composition also exhibits improved storage stability.

Another advantage of the thermally expandable composition of the present invention is that good expansion rates can be achieved over a wide range of temperatures even without the use of exothermic blowing agents, in particular without the use of azodicarbonamide.

Other subjects of the present invention are presented in other independent claims. Preferred aspects of the invention are presented in the dependent claims.

**Detailed description of the invention**

The subject of the present invention is a thermally expandable composition comprising:

a) A polymer component P comprising:

  a1) At least one epoxy-functional polymer **EP,** as defined in claim 1,
  a2) Optionally at least one acid anhydride-functional polymer **AP,** and
  a3) Optionally at least one thermoplastic polymer **TP,**

b) At least one chemical blowing agent **BA,** and
c) At least one dihydrazide **DH.**

Substance names beginning with "poly" designate substances which formally contain, per molecule, two or more of the functional groups occurring in their names. For instance, a polyol refers to a compound having at least two hydroxyl groups. A polyether refers to a compound having at least two ether groups.

The term "polymer" refers to a collective of chemically uniform macromolecules produced by a polyreaction (polymerization, polyaddition, polycondensation) where the macromolecules differ with respect to their degree of polymerization, molecular weight and chain length. The term also comprises derivatives of said collective of macromolecules resulting from polyreactions, that is, compounds which are obtained by reactions such as, for example, additions or substitutions, of functional groups in predetermined macromolecules and which may be chemically uniform or chemically non-uniform.

The term "molecular weight" refers to the molar mass (g/mol) of a molecule or a part of a molecule, also referred to as "moiety". The term "average molecular weight" refers to number average molecular weight ($M_n$) of an oligomeric or polymeric mixture of molecules or moieties. The molecular weight may be determined by conventional methods, preferably by gel permeation-chromatography (GPC) using polystyrene as standard, styrene-divinylbenzene gel with porosity of 100 Angstrom, 1000 Angstrom and 10000 Angstrom as the column and tetrahydrofurane as a solvent, at 35°C.

The term "melting temperature" refers to a temperature at which a material undergoes transition from the solid to the liquid state. The melting temperature ($T_m$) is preferably determined by differential scanning calorimetry (DSC) according to ISO 11357-3 standard using a heating rate of 2°C/min. The measurements can be performed with a Mettler Toledo DSC 3+ device and the $T_m$ values can be determined from the measured DSC-curve with the help of the DSC-software. In case the measured DSC-curve shows several peak temperatures, the first peak temperature coming from the lower temperature side in the thermogram is taken as the melting temperature ($T_m$).

The "amount or content of at least one component X" in a composition, for example "the amount of the at least one thermoplastic polymer TP" refers to the sum of the individual amounts of all thermoplastic polymers TP contained

in the composition. For example, in case the at least one thermoplastic polymer TP comprises 20 wt.-% of the total weight of the composition, the sum of the amounts of all thermoplastic polymers TP contained in the composition equals 20 wt.-%.

The term "room temperature" designates a temperature of 23°C.

Preferably, the polymer component **P** comprises at least 35 wt.-%, more preferably at least 45 wt.-%, even more preferably at least 55 wt.-%, still more preferably at least 60 wt.-%, in particular at least 65 wt.-%, such as at least 70 wt.-%, of the total weight of the thermally expandable composition.

According to one or more embodiments, the polymer component **P** comprises 35 - 95 wt.-%, preferably 45 - 90 wt.-%, more preferably 50 - 90 wt.-%, even more preferably 55 - 85 wt.-%, still more preferably 60 - 85 wt.-%, most preferably 65 - 85 wt.-%, of the total weight of the thermally expandable composition.

According to one or more embodiments, the thermally expandable composition is essentially free of organic peroxides, preferably essentially free of peroxides. The expression "essentially free of peroxides" is understood to mean that the thermally expandable composition may contain only traces of peroxides, such as less than 0.25 wt.-%, preferably less than 0.1 wt.-%, more preferably less than 0.01 wt.-%, based on the total weight of the thermally expandable composition.

According to one or more further embodiments, the thermally expandable composition is essentially free of free-radical cross-linkers. The expression "essentially free of free-radical cross-linkers" is understood to mean that the amount of such substances, which are able to cross-link polymers by free-radical curing mechanism is preferably less than 0.25 wt.-%, more preferably less than 0.1 wt.-%, even more preferably less than 0.05 wt.-%, based on the total weight of the thermally expandable composition.

The thermally expandable composition comprises at least one chemical blowing agent **BA.** Chemical blowing agents are organic or inorganic compounds that decompose under influence of, for example temperature or humidity, while at least one of the formed decomposition products is a gas. Commonly used chemical blowing agents include both exothermic and endothermic chemical blowing agents, such as azo compounds, hydrazides, nitroso compounds, carbamates, carbazides, bicarbonates, polycarboxylic acids, and salts of polycarboxylic acids.

Suitable exothermic chemical blowing agents for use as the at least one chemical blowing agent **BA** include, for example, azodicarbonamide, azoisobutytronitrile, azocyclohexyl nitrile, dinitrosopentamethylene tetramine, azodiamino benzene, benzene-1,3-sulfonyl hydrazide, calcium azide, 4,4'-diphenyldisulphonyl azide, p-toluenesulphonyl hydrazide, p-toluenesulphonyl semicarbazide, 4,4'-oxybis(benzenesulphonylhydrazide), trihydrazino triazine, and N,N'-dimethyl-N,N'-dinitrosoterephthalamide, and combinations thereof and the like.

Despite the fact that exothermic blowing agents have been widely used in thermally expandable compositions, especially in automotive industry, they may not be preferred for use in the thermally expandable composition of the present invention. Exothermic blowing agents may not be preferred since they have been found to have potential to trigger respiratory sensitivity, are generally not safe from a toxicological point of view or have a risk of explosion. Furthermore, by-products such as ammonia, formamide, formaldehyde or nitrosamines are released during decomposition of exothermic blowing agents and these substances have been classified as hazardous substances and their use is prohibited in the construction of automobiles.

According to one or more embodiments, the at least one chemical blowing agent **BA** is an endothermic chemical blowing agent. Endothermic chemical blowing agents have the advantage that they are not hazardous or explosive, and that fewer volatile organic compounds (VOCs) are created during their decomposition. The decomposition products are essentially carbon dioxide and water.

According to one or more embodiments, the thermally expandable composition is essentially free of ADCA (azodicarbonamide) and OBSH (4,4'-oxybis(benzenesulfonic acid hydrazide)), preferably essentially free of exothermic blowing agents, in particular ADCA, OBSH, DNPT (dinitroso pentamethylene tetramine), PTSS (p-toluenesulfonyl semicarbazide), BSH (benzene-4-sulfonyl hydrazide), TSH (4-toluenesulfonyl hydrazide), and 5-PT (5-phenyltetrazole). The expression "essentially free of" is understood to mean that the thermally expandable composition may contain only traces of the above listed compounds, such as less than 0.25 wt.-%, preferably less than 0.1 wt.-%, more preferably less than 0.01 wt.-%, based on the total weight of the thermally expandable composition.

According to one or more embodiments, the at least one chemical blowing agent **BA** is an endothermic chemical blowing agent comprising at least one organic acid. Suitable organic acids include, for example, monocarboxylic acids, such as acetic acid and propionic acid, as well as solid polycarboxylic acids, for example solid, hydroxy-functionalized or unsaturated dicarboxylic, tricarboxylic, tetracarboxylic or polycarboxylic acids, such as citric acid, tartaric acid, malic acid, fumaric acid, and maleic acid.

According to one or more embodiments, the at least one blowing agent **BA** comprises at least 85 wt.-%, preferably at least 90 wt.-%, more preferably at least 95 wt.-%, even more preferably at least 97.5 wt.-%, still more preferably at least 99 wt.-%, based on the total weight of the at least one blowing agent **BA,** of the at least one organic acid.

According to one or more embodiments, the at least one organic acid is a multifunctional organic acid having at least two acidic functional groups, preferably at least two carboxylic groups. Partially esterified multifunctional organic

acids having at least one free acidic functional group, in particular at least one free carboxylic group, are also suitable. According to one or more embodiments, the at least one organic acid has a molecular weight of not more than 1000 g/mol, preferably not more than 750 g/mol, more preferably not more than 500 g/mol.

According to one or more embodiments, the at least one organic acid is selected from the group consisting of citric acid, tartaric acid, malic acid, fumaric acid, and maleic acid, preferably citric acid.

Although some of the compounds used in the present invention are characterized as useful for specific functions, it should be understood that the use of these compounds is not limited to their typical functions. For example, it is also possible that the at least one organic acid, once heated to an elevated temperature, is also capable of acting as a hardener for polymers having functional groups, such as for the at least one epoxy-functional polymer **EP**.

The at least one organic acid may be present in the thermally expandable composition in free acid form, i.e. with protonated acidic functional groups, or as a salt with deprotonated acidic functional groups, for example as a carboxylate salt or as a mixture of these. Suitable cations for the carboxylate salts include, for example, $Li^+$, $Na^+$, $K^+$, $NH_4^+$, $Ca_2^+$, $Mg_2^+$, and the like.

According to one or more embodiments, the at least one organic acid is present in the thermally expandable composition in free acid form.

According to one or more embodiments, the at least one chemical blowing agent **BA** has a maximum decomposition peak temperature measured by Differential Scanning Calorimetry (DSC) in the range of 135 - 200°C, preferably 150 - 200°C, more preferably 155 - 200°C, even more preferably 160 - 200°C. Preferably, the maximum decomposition peak measured by DSC is determined by a DSC822e differential scanning calorimeter from Mettler-Toledo by keeping the sample for 2 min at 25°C, then heating the sample from 25°C to 280°C at a rate of 5°C/min, then keeping the sample for 2 min at 280°C and finally cooling the sample from 280°C to 25°C at a rate of 10°C/min.

According to one or more embodiments, the at least one chemical blowing agent **BA** comprises 1 - 35 wt.-%, preferably 2.5 - 25 wt.-%, more preferably 5 - 25 wt.-%, even more preferably 7.5 - 20 wt.-%, of the total weight of the thermally expandable composition.

According to one or more embodiments, the at least one organic acid comprises 1 - 35 wt.-%, preferably 5 - 25 wt.-%, more preferably 10 - 25 wt.-%, even more preferably 12.5 - 20 wt.-%, of the total weight of the thermally expandable composition.

It is possible that the at least one chemical blowing agent **BA** contains one or more activators that are used to lower the decomposition temperature of the at least one organic acid. Commonly used activators for organic acids include hydrogen carbonate (bicarbonate) and carbonate salts, in particular those of formula $XHCO_3$ or $X_2CO_3$, wherein X stands for a generic cation, such as $Na^+$, K+, $NH_4^+$, ½ $Zn^{2+}$, ½ $Mg_2^+$, and ½ $Ca_2^+$, in particular $Na^+$ and $K^+$. These types of activators have, however, the disadvantage that they tend to remain in the produced foam and that they are water-soluble and thus increase the water absorption of the foam. Increased water absorption is especially undesirable in automotive sector, wherein the foamed compositions are used to achieve improved corrosion resistance and long-term durability.

According to one or more embodiments, the thermally expandable composition is substantially free of sodium and potassium bicarbonates, preferably substantially free of bicarbonates of formula $XHCO_3$, wherein X stands for a generic cation, in particular $Na^+$, $K^+$, $NH_4^+$, ½ $Zn^{2+}$, ½ $Mg_2^+$, or ½ $Ca_2^+$, more preferably substantially free of bicarbonates of formula $XHCO_3$ and carbonates of formula $X_2CO_3$, wherein X stands for a generic cation, in particular $Na^+$, $K^+$, $NH_4^+$, ½ $Zn^{2+}$, ½ $Mg_2^+$, or ½ $Ca^{2+}$. The expression "substantially free of" is understood to mean that the thermally expandable composition may contain only traces of the above mentioned compounds, such as less than 0.5 wt.-%, preferably less than 0.25 wt.-%, more preferably less than 0.1 wt.-%, even more preferably less than 0.05 wt.-%, still more preferably less than 0.01 wt.-%, based on the total weight of the thermally expandable composition.

The thermally expandable composition further comprises at least one dihydrazide **DH**.

According to one or more embodiments, the at least one dihydrazide **DH** is a dihydrazide of formula (I)

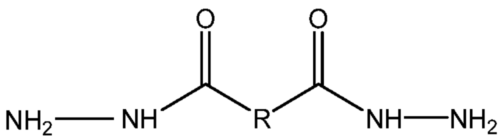

(I)

wherein R represents a monovalent linear or branched alkyl radical having 1 to 18 carbon atoms, an aryl or arylalkyl radical, or an aminoacid backbone.

According to one or more embodiments, the at least one dihydrazide **DH** is selected from the group consisting of adipic acid dihydrazide (ADH), Icosanedioic acid dihydrazide (LDH), isophthalic dihydrazide (IDH), dodecanedioic dihydrazide (DDH), sebacic acid dihydrazide (SDH), valine dihydrazide (VDH), glutaric dihydrazide (GDH), and pimelic acid dihydrazide (PDH), preferably from the group consisting of adipic acid dihydrazide (ADH), isophthalic dihydrazide

(IDH), dodecanedioic dihydrazide (DDH), and sebacic acid dihydrazide (SDH).

Suitable dihydrazides are commercially available, for example, from Otsuka Chemical Co., Ltd, under the trade name of Ajicure® (from Ajinomoto Fine-TechnoCo., Inc.), and under the trade name of Technicure® (from A&C Catalysts).

Preferably, the at least one dihydrazide **DH** is present in the thermally expandable composition in an amount of not more than 20 wt.-%, more preferably not more than 15 wt.-%, even more preferably not more than 10 wt.-%, based on the total weight of the thermally expandable composition.

According to one or more embodiments, the at least one dihydrazide **DH** comprises 0.01 - 10 wt.-%, preferably 0.05 - 7.5 wt.-%, more preferably 0.1 - 7.5 wt.-%, even more preferably 0.2 - 7.5 wt.-%, still more preferably 0.2 - 5 wt.-%, of the total weight of the thermally expandable composition.

According to one or more embodiments, the thermally expandable composition further comprises at least one functional guanidine of formula (II):

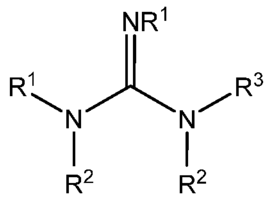

(II)

wherein $R^1$ represents a hydrogen atom or a monovalent linear or branched alkyl radical having 1 to 10 carbon atoms which furthermore optionally comprises a nitrogen atom, a cycloaliphatic radical, or an aryl or aryl alkyl radical;

$R^2$ represents a hydrogen atom or a monovalent linear or branched alkyl radical having 1 to 10 carbon atoms; and $R^3$ represents a hydrogen atom or a monovalent linear or branched alkyl radical having1 to 10 carbon atoms, or a cycloaliphatic radical which furthermore optionally comprises a nitrogen atom and/or an oxygen atom and/or silicon atom.

According to one or more embodiments, the at least one functional guanidine of formula (II) is selected from the group consisting of cyanoguanidine, methyl guanidine, dimethyl guanidine, trimethyl guanidine, tetramethyl guanidine, acetylacetoneguanidine, 1,3-Di-o-tolylguanidine, 2-tert-Butyl-1,1,3,3-tetramethylguanidine, 1,2-Diisopropyl-3-phenylguanidine, 1,2-Bis(2,6-diisopropylphenyl)-3-hexylguanidine, preferably cyanoguanidine.

Suitable functional guanidines of formula (II) are commercially available, for example, under the trade name of Dyhard® (from AlzChem Group AG).

According to one or more embodiments, the at least one functional guanidine of formula (II) comprises 0.01 -5 wt.-%, preferably 0.025 - 4.5 wt.-%, more preferably 0.1 - 3.5 wt.-%, even more preferably 0.15 - 2.5 wt.-%, still more preferably 0.2 - 1 wt.-%, of the total weight of the thermally expandable composition.

Epoxy-functional polymer EP

The thermally expandable composition comprises at least one epoxy-functional polymer **EP**. Preferably, the at least one epoxy-functional polymer **EP** has an average of more than one epoxy group per molecule. Furthermore, the at least one epoxy-functional polymer **EP** may contain either polymerized or grafted epoxy functionality, i.e. the epoxide moieties may be present as part of a polymer backbone or grafted onto a polymer as a side chain.

Suitable epoxy-functional polymers to be used as the at least one epoxy-functional polymer **EP** include olefin glycidyl (meth)acrylate copolymers, olefin alkyl (meth)acrylate glycidyl (meth)acrylate terpolymers, and glycidyl methacrylate grafted (co)polymers. The term "(meth)acrylate" designates in the present disclosure both acrylate and methacrylate.

Suitable olefin glycidyl (meth)acrylate copolymers to be used as the at least one epoxy-functional polymer **EP** include, for example, copolymers of ethylene, propylene, or butylene with glycidyl acrylate (GA) or with glycidyl (meth)acrylate (GMA).

According to one or more embodiments, the at least one epoxy-functional polymer **EP** comprises at least one olefin glycidyl (meth)acrylate copolymer **EP1,** preferably selected from the group consisting of ethylene glycidyl (meth)acrylate copolymers, propylene glycidyl (meth)acrylate copolymers, and butylene glycidyl (meth)acrylate copolymers, more preferably from the group consisting of ethylene glycidyl (meth)acrylate copolymers, in particular ethylene glycidyl methacrylate copolymers. Generally, the expression "the at least one component X comprises at least one component XN", such as "the at least one epoxy-functional polymer **EP** comprises at least one olefin glycidyl (meth)acrylate copolymer **EP1**" is understood to mean in the context of the present disclosure that the thermally expandable composition comprises

one or more olefin glycidyl (meth)acrylate copolymers **EP1** as representatives of the at least one epoxy-functional polymer **EP**.

According to one or more embodiments, the at least one olefin glycidyl (meth)acrylate copolymer **EP1** has:

- a content of glycidyl methacrylate of 1 - 50 wt.-%, more preferably 2 - 25 wt.-% and/or
- a melt flow index, determined according to ISO 1133 (190°C/2.16 kg), of not more than 100 g/10 min, preferably not more than 75 g/10 min, more preferably not more than 50 g/10 min and/or
- a melting temperature ($T_m$) as determined by DSC measurements conducted according to ISO 11357-3 of at or below 150°C, preferably at or below 135°C, in particular in the range of 75 - 150°C, preferably 85 - 135°C, more preferably 90 - 125°C.

According to one or more embodiments, the at least one epoxy-functional polymer **EP** is composed of the at least one olefin glycidyl (meth)acrylate copolymer **EP1,** preferably selected from the group consisting of ethylene glycidyl (meth)acrylate copolymers, propylene glycidyl (meth)acrylate copolymers, and butylene glycidyl (meth)acrylate copolymers, more preferably from the group consisting of ethylene glycidyl (meth)acrylate copolymers, in particular ethylene glycidyl methacrylate copolymers. Generally, the expression "the at least one component X is composed of at least one component XN", such as "the at least one epoxy-functional polymer **EP** is composed of the at least one olefin glycidyl (meth)acrylate copolymer **EP1**" is understood to mean in the context of the present disclosure that the at least one epoxy-functional polymer **EP** is selected from the group consisting of the at least one olefin glycidyl (meth)acrylate copolymer **EP1**.

Suitable olefin alkyl (meth)acrylate glycidyl (meth)acrylate terpolymers to be used as the at least one epoxy-functional polymer **EP** include, for example, terpolymers, in particular random terpolymers, of ethylene and alkyl (meth)acrylate with glycidyl acrylate (GA) or with glycidyl methacrylate (GMA), wherein the alkyl group of the alkyl (meth)acrylate is preferably selected from the group consisting of methylene, ethylene, propylene, and butylene, in particular methylene or butylene.

Preferred olefin alkyl (meth)acrylate glycidyl (meth)acrylate terpolymers include ethylene methyl acrylate glycidyl acrylate terpolymers (E/MA/GA), ethylene ethyl acrylate glycidyl acrylate terpolymers (E/EA/GA), ethylene propyl acrylate glycidyl acrylate terpolymers (E/PA/GA), ethylene butyl acrylate glycidyl acrylate terpolymers (E/BA/GA), ethylene methyl methacrylate glycidyl acrylate terpolymers (E/MMA/GA), ethylene ethyl methacrylate glycidyl acrylate terpolymers (E/EMA/GA), ethylene propyl methacrylate glycidyl acrylate terpolymers (E/PMA/GA), ethylene butyl methacrylate glycidyl acrylate terpolymers (E/BMA/GA), ethylene methyl acrylate glycidyl methacrylate terpolymers (E/MA/GMA), ethylene ethyl acrylate glycidyl methacrylate terpolymers (E/EA/GMA), ethylene propyl acrylate glycidyl methacrylate terpolymers (E/PA/GMA), ethylene butyl acrylate glycidyl methacrylate terpolymers (E/BA/GMA), ethylene methyl methacrylate glycidyl methacrylate terpolymers (E/MMA/GMA), ethylene ethyl methacrylate glycidyl methacrylate terpolymers (E/EMA/GMA), ethylene propyl methacrylate glycidyl methacrylate terpolymers (E/PMA/GMA), ethylene butyl methacrylate glycidyl methacrylate terpolymers (E/BMA/GMA).

According to one or more embodiments, the at least one epoxy-functional polymer **EP** comprises at least one olefin alkyl acrylate glycidyl (meth)acrylate terpolymer **EP2,** preferably selected from the group consisting of random terpolymers of ethylene, alkyl (meth)acrylate, and glycidyl methacrylate, wherein the alkyl group of the alkyl (meth)acrylate is preferably selected from the group consisting of methylene, ethylene, propylene, and butylene, in particular methylene or butylene.

According to one or more embodiments, the at least one olefin alkyl acrylate glycidyl (meth)acrylate terpolymer **EP2** has:

- a content of glycidyl methacrylate of 1 - 50 wt.-%, more preferably 2 - 25 wt.-% and/or
- a melt flow index, determined according to ISO 1133 (190°C/2.16 kg), of not more than 100 g/10 min, preferably not more than 75 g/10 min, more preferably not more than 50 g/10 min and/or
- a melting temperature ($T_m$) as determined by DSC measurements conducted according to ISO 11357-3 of at or below 150°C, preferably at or below 135°C, in particular in the range of 75 - 150°C, preferably 85 - 135°C, more preferably 90 - 125°C.

According to one or more embodiments, the at least one epoxy-functional polymer **EP** is composed of the at least one olefin alkyl acrylate glycidyl (meth)acrylate terpolymer **EP2,** preferably selected from the group consisting of random terpolymers of ethylene, alkyl (meth)acrylate, and glycidyl methacrylate, wherein the alkyl group of the alkyl (meth)acrylate is preferably selected from the group consisting of methylene, ethylene, propylene, and butylene, in particular methylene or butylene.

Suitable glycidyl (meth)acrylate grafted (co)polymers to be used as the at least one epoxy-functional polymer **EP** include, for example, glycidyl methacrylate grafted olefin vinyl acetate copolymers, glycidyl methacrylate grafted

ethylene-α-olefin copolymers, glycidyl methacrylate grafted propylene-α-olefin copolymers, glycidyl methacrylate grafted polyethylene, glycidyl methacrylate grafted polypropylene, and glycidyl methacrylate grafted olefin copolymer elastomers, glycidyl (meth)acrylate grafted styrene butadiene copolymers, and glycidyl (meth)acrylate grafted styrene ethylene butylene styrene terpolymers.

According to one or more embodiments, the at least one epoxy-functional polymer **EP** comprises at least one glycidyl methacrylate grafted (co)polymer **EP3,** preferably selected from the group consisting of glycidyl methacrylate grafted olefin vinyl acetate copolymers, glycidyl methacrylate grafted ethylene-α-olefin copolymers, glycidyl methacrylate grafted propylene-α-olefin copolymers, glycidyl methacrylate grafted polyethylene, glycidyl methacrylate grafted polypropylene, glycidyl (meth)acrylate grafted styrene butadiene copolymers, and glycidyl (meth)acrylate grafted styrene ethylene butylene styrene terpolymers.

According to one or more embodiments, the at least one glycidyl methacrylate grafted (co)polymer **EP3** has:

- a content of glycidyl methacrylate (GMA) of 0.1 - 10 wt.-%, preferably 0.1 - 5 wt.-%, more preferably 0.1 - 3.5 wt.-%, even more preferably 0.1 - 2.5 wt.-%, in particular 0.1 - 1.5 wt.-% and/or
- a melt flow index, determined according to ISO 1133 (190°C/2.16 kg), of not more than 100 g/10 min, preferably not more than 75 g/10 min, more preferably not more than 50 g/10 min and/or
- a melting temperature ($T_m$) as determined by DSC measurements conducted according to ISO 11357-3 of at or below 150°C, preferably at or below 135°C, in particular in the range of 75 - 150°C, preferably 85 - 135°C, more preferably 90 - 125°C.

According to one or more embodiments, the at least one epoxy-functional polymer **EP** is composed of the at least one glycidyl methacrylate grafted (co)polymer **EP3,** preferably selected from the group consisting of glycidyl methacrylate grafted olefin vinyl acetate copolymers, glycidyl methacrylate grafted ethylene-α-olefin copolymers, glycidyl methacrylate grafted propylene-α-olefin copolymers, glycidyl methacrylate grafted polyethylene, glycidyl methacrylate grafted polypropylene, glycidyl (meth)acrylate grafted styrene butadiene copolymers, and glycidyl (meth)acrylate grafted styrene ethylene butylene styrene terpolymers.

According to the invention, the at least one epoxy-functional polymer **EP** comprises the at least one olefin glycidyl (meth)acrylate copolymer **EP1** and/or the at least one olefin alkyl acrylate glycidyl (meth)acrylate terpolymer **EP2** and/or the at least one glycidyl (meth)acrylate grafted (co)polymer **EP3**. According to one or more preferred embodiments, the at least one epoxy-functional polymer **EP** is selected from the group consisting of the at least one olefin glycidyl (meth)acrylate copolymer **EP1,** the at least one olefin alkyl (meth)acrylate glycidyl (meth)acrylate terpolymer **EP2,** and the at least one glycidyl (meth)acrylate grafted (co)polymer **EP3**.

## Acid anhydride-functional polymer **AP**

The polymer component P of the thermally expandable composition can further comprise at least one acid anhydride-functional polymer **AP**. Preferred acid anhydride-functional polymers **AP** have an average of more than one acid anhydride group per molecule. Furthermore, the at least one acid anhydride-functional polymer **AP** may contain either polymerized or grafted acid anhydride functionality, i.e. the acid anhydride moieties may be present as part of a polymer backbone or grafted onto a polymer as a side chain.

Suitable acid anhydride-functional polymers to be used as the at least one acid anhydride-functional polymer **AP** include maleic anhydride-functional polymers and tetrahydrophthalic anhydride-functional polymers, in particular maleic anhydride-functional polymers. Suitable maleic anhydride-functional polymers include, for example, olefin maleic anhydride copolymers, olefin alkyl (meth)acrylate maleic anhydride terpolymers, and maleic anhydride grafted (co)polymers.

Suitable olefin alkyl acrylate maleic anhydride terpolymers to be used as the at least one acid anhydride-functional polymer **AP** include, for example, terpolymers in particular random terpolymers of ethylene and alkyl (meth)acrylate, and maleic anhydride, wherein the alkyl group of the alkyl (meth)acrylate is preferably selected from the group consisting of methylene, ethylene, propylene, and butylene.

According to one or more embodiments, the at least one acid anhydride-functional polymer **AP** comprises at least one olefin alkyl acrylate maleic anhydride terpolymer **AP1,** preferably selected from the group consisting of random terpolymers of ethylene, alkyl (meth)acrylate, and maleic anhydride, wherein the alkyl group of the alkyl (meth)acrylate is preferably selected from the group consisting of methylene, ethylene propylene, and butylene, more preferably methylene, ethylene, and butylene.

According to one or more embodiments, the at least one olefin alkyl acrylate maleic anhydride terpolymer **AP1** has:

- a content of maleic anhydride of 0.5 - 10 wt.-%, preferably 1 - 7.5 wt.-%, more preferably 1 - 5 wt.-% and/or

- a melt flow index, determined according to ISO 1133 (190 °C/2.16 kg), of not more than 100 g/10 min, preferably not more than 75 g/10 min, more preferably not more than 50 g/10 min and/or
- a melting temperature ($T_m$) as determined by DSC measurements conducted according to ISO 11357-3 of at or below 150°C, preferably at or below 135°C, in particular in the range of 75 - 150°C, preferably 85 - 135°C, more preferably 90 - 125°C.

According to one or more embodiments, the at least one acid anhydride-functional polymer **AP** is composed of the at least one olefin alkyl acrylate maleic anhydride terpolymer **AP1,** preferably selected from the group consisting of random terpolymers of ethylene, alkyl (meth)acrylate, and maleic anhydride, wherein the alkyl group of the alkyl (meth)acrylate is preferably selected from the group consisting of methylene, ethylene propylene, and butylene, more preferably methylene, ethylene, and butylene.

Suitable olefin maleic anhydride copolymers to be used as the at least one acid anhydride-functional polymer **AP** include, for example, copolymers of maleic anhydride with ethylene, propylene, or butylene.

According to one or more embodiments, the at least one acid anhydride-functional polymer **AP** comprises or is composed of at least one olefin maleic anhydride copolymer **AP2,** preferably selected from the group consisting of copolymers of ethylene, propylene, and butylene with maleic hydride, more preferably ethylene maleic anhydride copolymers.

Suitable maleic anhydride grafted (co)polymers to be used as the at least one acid anhydride-functional polymer **AP** include, for example, maleic anhydride grafted olefin alkyl (meth)acrylate copolymers, maleic anhydride grafted olefin vinyl acetate copolymers, maleic anhydride grafted ethylene-$\alpha$-olefin copolymers, maleic anhydride grafted propylene-$\alpha$-olefin copolymers, maleic anhydride grafted polyethylene, maleic anhydride grafted polypropylene, and maleic anhydride grafted olefin copolymer elastomers, such as maleic anhydride grafted ethylene-propylene rubber (EPR).

According to one or more embodiments, the at least one acid anhydride-functional polymer **AP** comprises at least one maleic anhydride grafted (co)polymer **AP3,** preferably selected from the group consisting of maleic anhydride grafted olefin alkyl (meth)acrylate copolymers, maleic anhydride grafted olefin vinyl acetate copolymers, maleic anhydride grafted ethylene-$\alpha$-olefin copolymers, maleic anhydride grafted propylene-$\alpha$-olefin copolymers, maleic anhydride grafted polyethylene, maleic anhydride grafted polypropylene, and maleic anhydride grafted olefin copolymer elastomers, more preferably from the group consisting of maleic anhydride grafted olefin vinyl acetate copolymers, maleic anhydride grafted polyethylene, and maleic anhydride grafted polypropylene.

According to one or more embodiments, the at least one maleic anhydride grafted (co)polymer **AP3** has:

- a content of maleic anhydride of 0.1 - 10 wt.-%, preferably 0.1 - 5 wt.-%, more preferably 0.1 - 3.5 wt.-%, even more preferably 0.1 - 2.5 wt.-%, in particular 0.1 - 1.5 wt.-% and/or
- a melt flow index, determined according to ISO 1133 (190°C/2.16 kg), of not more than 100 g/10 min, preferably not more than 75 g/10 min, more preferably not more than 50 g/10 min and/or
- a melting temperature ($T_m$) as determined by DSC measurements conducted according to ISO 11357-3 of at or below 150°C, preferably at or below 135°C, in particular in the range of 75 - 150°C, preferably 85 - 135°C, more preferably 90 - 125°C.

According to one or more embodiments, the at least one acid anhydride-functional polymer **AP** is composed of the at least one maleic anhydride grafted (co)polymer **AP3,** preferably selected from the group consisting of maleic anhydride grafted olefin alkyl (meth)acrylate copolymers, maleic anhydride grafted olefin vinyl acetate copolymers, maleic anhydride grafted ethylene-$\alpha$-olefin copolymers, maleic anhydride grafted propylene-$\alpha$-olefin copolymers, maleic anhydride grafted polyethylene, maleic anhydride grafted polypropylene, and maleic anhydride grafted olefin copolymer elastomers, more preferably from the group consisting of maleic anhydride grafted olefin vinyl acetate copolymers, maleic anhydride grafted polyethylene, and maleic anhydride grafted polypropylene.

According to one or more embodiments, the at least one acid anhydride-functional polymer **AP** comprises the at least one olefin alkyl acrylate maleic anhydride terpolymer **AP1** and/or the at least one olefin maleic anhydride copolymer **AP2** and or the at least one maleic anhydride grafted (co)polymer **AP3.**

According to one or more preferred embodiments, the at least one acid anhydride-functional polymer **AP** is selected from the group consisting of olefin alkyl acrylate maleic anhydride terpolymers, olefin maleic anhydride copolymers, and maleic anhydride grafted (co)polymers, preferably from the group consisting of the at least one olefin alkyl acrylate maleic anhydride terpolymer **AP1,** the at least one olefin maleic anhydride copolymer **AP2,** and the at least one maleic anhydride grafted (co)polymer **AP3,** more preferably from the group consisting of the at least one olefin alkyl acrylate maleic anhydride terpolymer **AP1** and the at least one olefin maleic anhydride copolymer **AP2**.

According to one or more embodiments, the polymer component **P** of the thermally expandable composition further comprises, in addition to the at least one epoxy-functional polymer **EP,** the at least one acid anhydride-functional polymer **AP,** wherein the ratio of the amount of the at least one epoxy-functional polymer **EP** to the amount of the at

least one acid anhydride-functional polymer **AP** is preferably in the range of from 0.3:1 to 3:1, more preferably from 0.5:1 to 2:1 and wherein the at least one epoxy-functional polymer **EP** is preferably composed of the at least one olefin glycidyl (meth)acrylate copolymer **EP1** and/or the at least one olefin alkyl acrylate glycidyl (meth)acrylate terpolymer **EP2** and/or the at least one glycidyl (meth)acrylate grafted (co)polymer **EP3,** and wherein the at least one acid anhydride-functional polymer **AP** is preferably composed of the at least one olefin alkyl acrylate maleic anhydride terpolymer **AP1** and/or the at least one olefin maleic anhydride copolymer **AP2** and/or the at least one maleic anhydride grafted (co)polymer **AP3**.

Thermoplastic polymer

The polymer component **P** of the thermally expandable composition can further comprise at least one thermoplastic polymer **TP**. Principally all thermoplastic polymers and thermoplastic elastomers (TPE) are suitable as the at least one thermoplastic polymer **TP**. It goes without saying that the at least one thermoplastic polymer **TP** is different from the at least one epoxy-functional polymer **EP** and from the at least one acid anhydride-functional polymer **AP**.

Suitable polymers to be used as the at least one thermoplastic polymer **TP** include, for example, styrene-butadiene copolymers, styrene-isoprene copolymers, ethylene-vinyl acetate copolymers (EVA), olefin (meth)acrylate copolymers, olefin alkyl (meth)acrylate copolymers, olefin (meth)acrylic acid copolymers, polyolefins, and halogenated polyolefins, such as polyvinyl chloride (PVC). Particularly suitable olefin (meth)acrylate copolymers and olefin alkyl (meth)acrylate copolymers include, for example, ethylene-ethyl acrylate copolymers, ethylene-butyl acrylate copolymers (EBA), and ethylene-2-ethylhexyl acrylate copolymers.

Suitable thermoplastic polymers **TP** may contain unsaturated olefinic bonds and they can also contain functional groups other than epoxide groups or acid anhydride groups, such as halogen, nitrile, thiol, hydroxyl, or carboxyl groups. It is however preferred that the at least one thermoplastic polymer **TP** is free of functional groups, which may interfere with the curing mechanism of the thermally expandable composition. This approach offers a better controllability of the curing mechanism and secondary properties such as the adhesion properties.

According to one or more embodiments, the at least one thermoplastic polymer **TP** is a non-functionalized thermoplastic polymer, preferably selected from the group consisting of ethylene-vinyl acetate copolymers, olefin (meth)acrylate copolymers, olefin alkyl (meth)acrylate copolymers, and olefin (meth)acrylic acid copolymers, more preferably from the group consisting of ethylene-vinyl acetate copolymers, olefin (meth)acrylate copolymers and olefin alkyl (meth)acrylate copolymers, even more preferably from the group consisting of olefin (meth)acrylate copolymers and olefin alkyl (meth)acrylate copolymers.

According to one or more embodiments, the at least one thermoplastic polymer **TP** has:

- a melt flow index determined according to ISO 1133 (190°C/2.16 kg) of not more than 200 g/10 min, preferably not more than 175 g/10 min, even more preferably not more than 155 g/10 min and/or
- a melting temperature ($T_m$) as determined by DSC measurements conducted according to ISO 11357-3 of at or below 125°C, preferably at or below 110°C, more preferably at or below 100°C.

According to one or more embodiments, the at least one thermoplastic polymer **TP** comprises at least one first non-functionalized thermoplastic polymer **TP1** and at least one second non-functionalized thermoplastic polymer **TP2** different from the at least one first non-functionalized thermoplastic polymer **TP1,** wherein the at least one first and second non-functionalized thermoplastic polymers **TP1** and **TP2** are preferably selected from the group consisting of ethylene-vinyl acetate copolymers, olefin (meth)acrylate copolymers, olefin alkyl (meth)acrylate copolymers, and olefin (meth)acrylic acid copolymers, more preferably from the group consisting of ethylene-vinyl acetate copolymers, olefin (meth)acrylate copolymers and olefin alkyl (meth)acrylate copolymers, even more preferably from the group consisting of olefin (meth)acrylate copolymers and olefin alkyl (meth)acrylate copolymers.

According to one or more embodiments, the at least one first non-functionalized thermoplastic polymer **TP1** has a melt flow index determined according to ISO 1133 (190°C/2.16 kg) of not more than 25 g/10 min, more preferably not more than 15 g/10 min, even more preferably not more than 10 min, in particular 1 - 10 g/10 min, preferably 1 - 7.5 g/10 min and/or the at least one second non-functionalized thermoplastic polymer **TP2** has a melt flow index determined according to ISO 1133 (190°C/2.16 kg) of at least 15 g/10 min, more preferably at least 20 g/10 min, even more preferably at least 25 g/10 min, in particular 25 - 200 g/10 min, preferably 30 - 175 g/10 min.

According to one or more embodiments, the weight ratio of the total amount of the at least one first non-functionalized thermoplastic polymer **TP1** and the at least one second non-functionalized thermoplastic polymer **TP2** is in the range of from 5:1 to 1:3, preferably from 3:1 to 1:2, more preferably from 2.5:1 to 1:1.

According to one or more embodiments, the at least one thermoplastic polymer **TP** is composed of the at least one first non-functionalized thermoplastic polymer **TP1** and the at least one second non-functionalized thermoplastic polymer **TP2**, wherein the at least one first and second non-functionalized thermoplastic polymers **TP1** and **TP2** are preferably selected from the group consisting of ethylene-vinyl acetate copolymers, olefin (meth)acrylate copolymers,

olefin alkyl (meth)acrylate copolymers, and olefin (meth)acrylic acid copolymers, more preferably from the group consisting of ethylene-vinyl acetate copolymers, olefin (meth)acrylate copolymers and olefin alkyl (meth)acrylate copolymers, even more preferably from the group consisting of olefin (meth)acrylate copolymers and olefin alkyl (meth)acrylate copolymers.

According to one or more embodiments, the polymer component **P** of the thermally expandable composition further comprises, in addition to the at least one epoxy-functional polymer **EP**, the at least one thermoplastic polymer **TP**, wherein the at least one epoxy-functional polymer **EP** preferably comprises or is composed of the at least one olefin glycidyl (meth)acrylate copolymer **EP1** and/or the at least one olefin alkyl acrylate glycidyl (meth)acrylate terpolymer **EP2** and/or the at least one glycidyl (meth)acrylate grafted (co)polymer **EP3** and wherein the at least one thermoplastic polymer **TP** preferably comprises or is composed of the at least one first non-functionalized thermoplastic polymer **TP1** and the at least one second non-functionalized thermoplastic polymer **TP2** different from the at least one first non-functionalized thermoplastic polymer **TP1**, wherein the at least one first and second non-functionalized thermoplastic polymers **TP1** and **TP2** are preferably selected from the group consisting of ethylene-vinyl acetate copolymers, olefin (meth)acrylate copolymers, olefin alkyl (meth)acrylate copolymers, and olefin (meth)acrylic acid copolymers, more preferably from the group consisting of ethylene-vinyl acetate copolymers, olefin (meth)acrylate copolymers and olefin alkyl (meth)acrylate copolymers.

According to one or more embodiments, the polymer component **P** of the thermally expandable composition comprises or is composed of the at least one epoxy-functional polymer **EP** and the at least one acid anhydride-functional polymer **AP** and the at least one thermoplastic polymer **TP,** wherein the at least one thermoplastic polymer **TP** preferably comprises at least 35 wt.-%, more preferably at least 45 wt.-%, even more preferably at least 55 wt.-%, of the total weight of the polymer component **P** and wherein at least one epoxy-functional polymer **EP** preferably comprises or is composed of the at least one olefin glycidyl (meth)acrylate copolymer **EP1** and/or the at least one olefin alkyl acrylate glycidyl (meth)acrylate terpolymer **EP2** and/or the at least one glycidyl (meth)acrylate grafted (co)polymer **EP3** and wherein the at least one acid anhydride-functional polymer **AP** preferably comprises or is composed of the at least one olefin alkyl acrylate maleic anhydride terpolymer **AP1** and/or the at least one olefin maleic anhydride copolymer **AP2** and/or the at least one maleic anhydride grafted (co)polymer **AP3** and wherein the at least one thermoplastic polymer **TP** preferably comprises or is composed of the at least one first non-functionalized thermoplastic polymer **TP1** and the at least one second non-functionalized thermoplastic polymer **TP2** different from the at least one first non-functionalized thermoplastic polymer **TP1,** wherein the at least one first and second non-functionalized thermoplastic polymers **TP1** and **TP2** are preferably selected from the group consisting of ethylene-vinyl acetate copolymers, olefin (meth)acrylate copolymers, olefin alkyl (meth)acrylate copolymers, and olefin (meth)acrylic acid copolymers, more preferably from the group consisting of ethylene-vinyl acetate copolymers, olefin (meth)acrylate copolymers and olefin alkyl (meth)acrylate copolymers.

According to one or more embodiments, the polymer component P of the thermally expandable composition is composed of the at least one epoxy-functional polymer **EP,** wherein the at least one epoxy-functional polymer **EP** preferably comprises or is composed of the at least one olefin glycidyl (meth)acrylate copolymer **EP1** and/or the at least one olefin alkyl acrylate glycidyl (meth)acrylate terpolymer **EP2** and/or the at least one glycidyl (meth)acrylate grafted (co)polymer **EP3,** more preferably of the at least one olefin glycidyl (meth)acrylate copolymer **EP1** and/or the at least one olefin alkyl acrylate glycidyl (meth)acrylate terpolymer **EP2.**

According to one or more embodiments, the thermally expandable composition is substantially free of epoxy resins, in particular free of solid epoxy resins of formula (III), liquid epoxy resins of formula (IV), and solid epoxy resins of formula (V). The expression "substantially free of" is understood to mean that the amount of the epoxy resins is in the thermally expandable composition is not more than 1.5 wt.-%, preferably not more than 1.0 wt.-%, more preferably not more than 0.5 wt.-%, even more preferably not more than 0.25 wt.-%, in particular not more than 0.1 wt.-%, based on the total weight of the thermally expandable composition. The thermally expandable compositions according to these embodiments are particularly suitable for use in sealing and baffling of hollow structures.

Apart from the essential and optional ingredients listed above, the thermally expandable composition may contain other compounds commonly used in such compositions and known to the ordinarily person skilled in the art. These include, for example, tackifying resins, fillers, colorants, dispersion aids or homogenizers, stabilizers, and the like.

The term "tackifying resin" designates in the present document resins that in general enhance the adhesion and/or tackiness of a composition. The term "tackiness" refers in the present document to the property of a substance of being sticky or adhesive by simple contact, which can be measured, for example, as a loop tack. Preferred tackifying resins are tackifying at a temperature of 25°C. Such tackifying resins lead to good adhesion on metal substrates, especially oiled metal substrates, both before and after foaming of the thermally expandable composition.

Suitable tackifying resins to be used in the thermally expandable composition have a relatively low average molecular weight ($M_n$), such as not more than 5’000 g/mol, in particular not more than 3’500 g/mol, preferably not more than 2’500 g/mol and a softening point, determined by a Ring and Ball method according to DIN EN 1238, of at or below 180°C, preferably at or below 160°C, more preferably at or below 150°C. Suitable tackifying resins include, in particular, synthetic resins, natural resins, and chemically modified natural resins.

The term "synthetic resin" designates in the present disclosure compounds obtained from the controlled chemical reactions such as polyaddition or polycondensation between well-defined reactants that do not themselves have the characteristic of resins. Monomers that may be polymerized to synthesize the synthetic resins may include aliphatic monomer, cycloaliphatic monomer, aromatic monomer, or mixtures thereof. Suitable aliphatic monomers may include $C_4$, $C_5$, and $C_6$ paraffins, olefins, and conjugated diolefins. Examples of aliphatic monomers or cycloaliphatic monomers include butadiene, isobutylene, 1,3-pentadiene, 1,4-pentadiene, cyclopentane, 1-pentene, 2-pentene, 2-methyl-1-pentene, 2-methyl-2-butene, 2-methyl-2-pentene, isoprene, cyclohexane, 1- 3-hexadiene, 1-4-hexadiene, cyclopentadiene, and dicyclopentadiene. Examples of aromatic monomer include $C_8$, $C_9$, and $C_{10}$ aromatic monomers. Typical aromatic monomers include, styrene, alphamethyl styrene, vinyl toluene, methoxy styrene, tertiary butyl styrene, chlorostyrene, coumarone, and indene monomers including indene, and methyl indene, and combinations thereof.

Suitable synthetic resins include, for example, hydrocarbon resins, coumarone-indene resins, polyindene resins, polystyrene resins, vinyl toluene-alphamethyl styrene copolymer resins, and alphamethyl styrene resins.

The term "hydrocarbon resin" designates in the present disclosure synthetic resins made by polymerizing mixtures of unsaturated monomers obtained from petroleum based feedstocks, such as by-products of cracking of natural gas liquids, gas oil, or petroleum naphthas. These types of hydrocarbon resins are also known as "petroleum resins" or as "petroleum hydrocarbon resins". The hydrocarbon resins include also pure monomer aromatic resins, which are prepared by polymerizing aromatic monomer feedstocks that have been purified to eliminate color causing contaminants and to precisely control the composition of the product.

Suitable hydrocarbon resins are commercially available, for example, under the trade name of Wingtack®, Wingtack® Plus, Wingtack® Extra, and Wingtack® STS (all from Cray Valley); under the trade name of Escorez® 1000 series, Escorez® 2000 series, and Escorez® 5000 series (all from ExxonMobil Chemical); under the trade name of Novares® T series, Novares® TT series, Novares® TD series, Novares® TL series, Novares® TN series, Novares® TK series, and Novares® TV series (all from RÜTGERS Novares GmbH); and under the trade name of Kristalex®, Plastolyn®, Piccotex®, Piccolastic® and Endex® (all from Eastman Chemicals).

Tackifying resins, if used, are preferably included in the thermally expandable composition in an amount of 2 - 20 wt.-%, preferably 4 - 15 wt.-%, more preferably 5 - 10 wt.-%, based on the total weight of the thermally expandable composition.

Suitable fillers to be used in the thermally expandable composition include, for example, ground or precipitated calcium carbonate, lime, calcium-magnesium carbonate, talcum, gypsum, graphite, barite, pyrogenic or precipitated silica, silicates, mica, wollastonite, kaolin, feldspar, chlorite, bentonite, montmorillonite, dolomite, quartz, cristobalite, calcium oxide, aluminum hydroxide, magnesium oxide, hollow ceramic spheres, hollow glass spheres, hollow organic spheres, glass spheres, functionalized alumoxanes, and carbon black. Suitable fillers include both organically coated and also uncoated commercially available forms of the fillers included in the above presented list. Particularly suitable fillers include ground or precipitated calcium carbonate, calcium-magnesium carbonate, talcum, gypsum, graphite, barite, pyrogenic or precipitated silica, silicates, mica, wollastonite, carbon black, and mixtures thereof.

Fillers, if used, are preferably incorporated in the thermally expandable compositions in an amount of 1 - 20 wt.-%, more preferably 1 - 15 wt.-%, even more preferably 2.5 - 15 wt.-%, based on the total weight of the thermally expandable composition.

Colorants or dyes, such as pigments, for example on the basis of carbon black, may also be included in the thermally expandable composition. Their amount is preferably between 0.1 - 1 wt.-%, based on the total weight of the thermally expandable composition.

Preferably, the thermally expandable composition after curing has a volume increase compared to the uncured composition of at least 150%, preferably at least 200%, whereby the volume increase is determined using the DIN EN ISO 1183 method of density measurement (Archimedes principle) in deionised water in combination with sample mass determined by a precision balance.

According to one or more embodiments, the thermally expandable composition after curing has a volume increase compared to the uncured composition in the range of 150 - 3000%, preferably 150 - 2500%, more preferably 200 - 2000%, even more preferably 200 - 1750%.

The thermally expandable compositions according to the present invention can be produced by mixing the constituents in any suitable mixing apparatus, for example in a dispersion mixer, planetary mixer, such as planetary roller, extruder such as a twin screw extruder, kneader, such as a Buss, Banbury, or roller kneader, or a two-roll mill.

It may be advantageous to heat the constituents before or during mixing, either by applying external heat sources or by friction generated by the mixing process itself, in order to facilitate processing of the components into a homogeneously mixed mixture by decreasing viscosities and/or melting of individual components. However, care has to be taken, for example by temperature monitoring and using cooling devices where appropriate, not to exceed the activation temperatures of the at least one chemical blowing agent **BA.** The thus obtained thermally expandable composition is preferably essentially solid at normal room temperature (23°C), meaning that it does not visibly deform at this temperature just by means of gravity during a period of at least 24 h.

After mixing of the constituents of the thermally expandable composition, the thus obtained composition may be shaped into its desired form by, for example, extruding, blow-molding, pelleting, injection molding, compression molding, punching, or stamping or using any other suitable process.

The thermally expandable composition of the present invention may be produced in a substantially one-step process, involving the addition of all constituents in a series and/or simultaneously. However, it may also be advantageous to provide the thermally expandable composition as a two-part system, or even multipart system. In these cases, the constituents of the thermally expandable composition are provided in separate air- and moisture impermeable packages or compartments of a single package and they are mixed with each other and optionally with other compounds at the time of use or immediately before the time of use of the thermally expandable composition. Such an approach may, for example, be taken to increase shelf life of the thermally expandable composition in places with demanding conditions (such as extraordinarily high temperatures), to optimize storage room demand and transport weight, or to enable providing tailor-made, modular compositions for different applications.

The thermally expandable compositions according to the present invention are storage stable at normal storage conditions. The term "storage stable" refers in the present disclosure to materials, which can be stored at specified storage conditions for long periods of time, such as at least one month, in particular at least 3 months, without any significant changes in the application related properties of the material. The "typical storage conditions" refer here to temperatures of not more than 60°C, in particular not more than 50°C.

The expansion of the thermally expandable composition of the present invention is triggered by heating. This means that the thermally expandable composition is activated by a heating step that exceeds its activation temperature and exhibits a duration long enough for the decomposition of the at least one chemical blowing agent **BA** (resulting in gas formation) to proceed until the expandable material has expanded and cured into its intended final (sufficiently expanded and stable) state. The optimal temperature and duration of the heating step (dwell time) depends on the embodiment of the thermally expandable composition, in particular on the composition of the at least one chemical blowing agent **BA** and the at least one dihydrazide **DH** contained in the thermally expandable composition. The thermally expandable composition may have an activation temperature in the range of 120 - 250°C, preferably 140 - 220°C, and a dwell time of the heating step in the range of 5 - 90 min, preferably 10 - 60 min.

The preferences given above for the polymer component **P,** the at least one epoxy-functional polymer **EP,** the at least one acid anhydride-functional polymer **AP,** the at least one thermoplastic polymer **TP,** the at least one chemical blowing agent **BA,** and the at least one dihydrazide **DH** apply equally for all subjects of the present invention unless stated otherwise.

Another subject of the present invention is a baffle and/or a reinforcement element for hollow structures comprising or essentially consisting of the thermally expandable composition of the present invention.

Such elements are used to seal, baffle, and/or reinforce hollow structures, for example, a cavity in a hollow structural part of an automobile. Hollow parts in cars may include body components (for example panels), frame components (for example, hydroformed tubes), pillar structures (for example, A, B, C, or D-pillars), bumpers, roofs, or the like.

According to one or more embodiments, the baffle and/or reinforcement element for hollow structures essentially consists of the thermally expandable composition of the present invention. In these embodiments, it is advantageous to provide the element with such a shape that it can be easily fitted into and attached to the walls of the hollow structure to be baffled and/or reinforced. Such shaped elements can be provided from the thermally expandable composition, for example, by injection molding, punching or stamping, or extrusion through a shape template.

According to one or more further embodiments, the baffle and/or reinforcement element further comprises a carrier on which the thermally expansible composition is deposited or attached. Such a design may be more cost-efficient and it may facilitate fixation of the baffle and/or reinforcement element on the walls of the structure to be baffled and/or reinforced, for example by incorporation of pins, bolts, or hooks on the carrier element. Furthermore, with a suitable design of the carrier element, the mechanical performance and stability of the baffle and/or reinforcement element can be improved.

The carrier of the baffle and/or reinforcement element, if used, may consist of any material that can be processed into a shape. Preferred materials for the carrier include polymeric materials, such as a plastic, elastomers, thermoplastics, blends thereof, and the like. Preferred thermoplastic materials include, without limitation, polymers such as polyurethanes, polyamides, polyesters, polyolefins, polysulfones, polyethylene terephthalates (PET), polyvinylchlorides (PVC), chlorinated polyolefins, and the like. Especially preferred are high-temperature stable polymers such as poly(phenyl ethers), polysulfones, polyethersulfones, polyamides, in particular polyamide 6, polyamide 6,6, polyamide 11, polyamide 12, and mixtures thereof. Other suitable materials for the carrier include metals, especially aluminum or steel, or naturally grown, organic materials, such as wood or other (pressed) fibrous materials. Also glassy or ceramic materials can be used. It is also possible to use any combination of such materials. It is also contemplated that such materials can be filled, for example, with fibers, minerals, clays, silicates, carbonates, combinations thereof, or the like, or be foamed.

The carrier element can further exhibit any shape or geometry. It can also consist of several, not directly connected parts. For example, it can be massive, hollow, or foamed, or it can exhibit a grid-like structure. The surface

of the carrier element can typically be smooth, rough, or structured, according to the intended use of the baffle and/or reinforcement element.

Another subject of the present invention is a process for manufacturing a baffle and/or reinforcement element of the present invention, wherein the thermally expandable composition is injection-molded onto a carrier or co-extruded with a carrier.

The details of the manufacturing process of a baffle and/or reinforcement element of the present invention depends largely on the material of the carrier. If the material of the carrier can be (injection-) molded or extruded, the baffle and/or reinforcement element can be produced in a two-step injection-molding process or by co-extruding the carrier and the thermally expandable composition.

In case of a two-step injection molding process, the first step comprises injecting the material of the carrier into a mold. After solidification, the cavity of the injection molding tool is enlarged or adjusted or the injection-molded piece is transferred into another tool followed by a second step comprising injecting of the thermally expandable composition.

In case the carrier cannot be shaped by injection-molding or extrusion, for example, because it is composed of a metal or an alloy, the carrier may be first manufactured by a suitable process and then introduced into an injection-molding tool. The thermally expandable composition may then be injection-molded into the tool where the carrier was previously placed. Another possibility is to extrude the thermally expandable composition onto a prefabricated carrier element. Of course there is also the possibility of manufacturing the carrier and an element of the thermally expandable composition individually by any suitable process, and then attaching the element of the thermally expandable composition to the carrier by any suitable means, such as chemically or physically, for example by gluing or the like, or mechanically, for example, by bolting, screwing, or the like.

Another subject of the present invention is the use of the baffle and/or reinforcement element of the present invention for sealing, baffling, or reinforcing of a cavity or a hollow structure of a land-, water-, or air-vehicle, preferably an automotive vehicle, and/or a cavity of a building such that the transmission of noise, vibrations, humidity, and/or heat is reduced, and/or the structure surrounding said cavity or hollow structure is mechanically strengthened.

Still another subject of the present invention is a method for sealing, baffling and/or reinforcing a cavity or a hollow structure, wherein an element comprising a thermally expandable composition according the present invention is introduced into said cavity or hollow structure and subsequently expanded by heat and/or by UV-treatment such that said cavity or hollow structure is at least partially filled by the expanded composition.

The temperature of the thermal expansion step is preferably 140 - 250°C, more preferably of 150 - 220°C, even more preferably 150 - 200°C. Preferred duration of the thermal expansion step, i.e. preferred baking time of the thermally expandable composition, is 5 - 90 min, more preferably 10 - 60 min, even more preferably 10 - 30 min.

Regarding the thermal activation of the element comprising the thermally expandable composition when used in manufacturing of automotive vehicles, it is advantageous to couple the thermal activation with another process step involving heat treatment. An example of such a process step is the electrocoating (cathodic dip painting/coating) of the chassis of a car body.

## Examples

The followings chemicals shown in Table 1 were used in formulating the thermally expandable compositions.

Table 1

| | |
|---|---|
| *Polymer* ***TP1*** | Random copolymer of ethylene and butyl acrylate, 28-32 wt.-% of butyl acrylate, Melt Index (190°C/2.16 kg) of 1.5-2.5 g/10 min (ISO 1133) |
| *Polymer* ***TP2*** | Random copolymer of ethylene and butyl acrylate, 33-37 wt.-% of butyl acrylate, Melt Index (190°C/2.16 kg) of 35-45 g/10 min (ISO 1133) |
| *Polymer* ***EP1*** | Copolymer of ethylene and glycidyl methacrylate, 6-10 wt.-% of glycidyl methacrylate, Melt Index (190°C/2.16 kg) of 0.5-4.5 g/10 min (ISO 1133) |
| *Polymer* ***EP2*** | Random terpolymer of ethylene, acrylic ester, and glycidyl methacrylate, 6-10 wt.-% of glycidyl methacrylate, Melt Index (190°C/2.16 kg) of 5-10 g/10 min (ISO 1133) |
| *Polymer* ***AP*** | Random terpolymer of ethylene, acrylic ester, and maleic anhydride, 6 wt.-% of butyl acrylate, 3.1 wt.-% of maleic anhydride, Melt Index (190°C/2.16 kg) of 3-10 g/10 min (ISO 1133) |
| *Filler* | $CaCO_3$ |
| *Blowing agent* | Citric acid, 99 wt.-%, $d_{50}$ particle size 16-18 $\mu$m, maximum decomposition peak measured by DSC* 175 - 200°C |

(continued)

| | |
|---|---|
| *Curative-1* | Dicyandiamide |
| *Curative-2* | Sebacic acid dihydrazide (SDH) |
| *Curative-3* | Dodecanedioic dihydrazide (DDH) |
| *Curative-4* | Adipic acid dihydrazide (ADH) |
| *Curative-5* | Isophthalic dihydrazide (IDH) |

Determined by DSC822e differential scanning calorimeter from Mettler-Toledo by keeping the sample for 2 min at 25°C, then heating the sample from 25°C to 280°C at a rate of 5 °C/min, then keeping the sample for 2 min at 280°C and finally cooling the sample from 280°C to 25°C at a rate of 10°C/min

Preparation of the thermally expandable compositions

All inventive and reference example compositions in this document were produced on standard production equipment suitable to compound thermoplastics with temperature control, i.e. twin screw extruder, Buss kneader or Banbury mixer. Polymers were mixed until homogeneous at a temperature 100 - 110°C after which the system was cooled below activation of heat reactive raw materials (< 90°C). Heat reactive raw materials were then mixed into the system until homogeneous. The obtained material was subsequently hot-pressed into test samples that were used for volume expansion and water absorption testing procedures.

Volume expansion

Expansion properties were tested for all samples by heat treating (baking) the individual samples at temperatures of 155 and 195°C for 10 and 20 minutes in an oven, respectively. The heating ramp from room temperature (23°C) to the respective baking temperature was 15 min (to 155°C) or 10 min (to 195°C). The temperatures and magnitude of expansion (in % based on the original volume prior to expansion) at the corresponding baking temperatures are shown in Table 2.

Expansions were determined for each sample by measuring the density before and after expansion. The densities were determined according to DIN EN ISO 1183 using the water immersion method (Archimedes principle) in deionised water and a precision balance to measure the mass.

Water absorption

The water absorption properties of the thermally expandable materials were tested using samples having the approximate dimensions 20 mm × 20 mm × 4 mm. The samples were prepared by following the procedure as described above and expanded and cured by heat-treatment using the above mentioned cycles. Thereafter, the heat-treated test samples were conditioned for 24 hours at normal room conditions (23°C, 50% relative humidity) and the initial weigh before water absorption was measured.

The conditioned test samples were kept for 24 hours in a container filled with water (water bath) having a water temperature of 23°C. The samples were kept immersed in water approximately 15 cm beneath the surface of the water. After the water storage, the test samples were removed from water bath, dried on the surface with an absorbent cloth, left to dry for 2 hours, after which the weight after water absorption was measured.

The water absorption values (wt.-%) were then calculated according to the following equation:

$$Water\ absorption = \frac{(m_i - m_0)}{m_0} \cdot 100\ \%$$

wherein mo is mass of the test sample prior to storage in water bath and mi is the mass of the test sample after a storage time i in water bath.

Table 2

| Compositions [pbw] | Ref-1 | Ex-1 | Ex-2 | Ex-3 | Ex-4 | Ex-5 | Ex-6 | Ex-7 | Ex-8 | Ex-9 | Ex-10 |
|---|---|---|---|---|---|---|---|---|---|---|---|
| Polymer **TP1** | 35.95 | 35.95 | 35.95 | 35.95 | 35.95 | 35.95 | 35.95 | 35.95 | 35.95 | 35.95 | 35.95 |
| Polymer **TP2** | 22.55 | 22.55 | 22.55 | 22.55 | 22.55 | 22.55 | 22.55 | 22.55 | 22.55 | 22.55 | 22.55 |
| Polymer **EP1** | 9.75 | 9.75 | 9.75 | 9.75 | 9.75 | 9.75 | 9.75 | 9.75 | 9.75 | 9.75 | 9.75 |
| Polymer **EP2** | - | - | - | - | - | - | - | - | - | - | - |
| Polymer **AP** | 9.75 | 9.75 | 9.75 | 9.75 | 9.75 | 9.75 | 9.75 | 9.75 | 9.75 | 9.75 | 9.75 |
| Filler | 7.00 | 7.00 | 7.00 | 7.00 | 7.00 | 7.00 | 7.00 | 7.00 | 7.00 | 7.00 | 7.00 |
| Blowing agent | 15.00 | 15.00 | 15.00 | 15.00 | 15.00 | 15.00 | 15.00 | 15.00 | 15.00 | 15.00 | 15.00 |
| Curative-1 | - | 0.50 | 0.50 | - | 0.50 | - | - | 0.50 | - | - | - |
| Curative-2 | - | 0.25 | 0.50 | - | - | - | - | - | - | - | - |
| Curative-3 | - | - | - | 0.37 | 0.50 | - | - | - | - | - | - |
| Curative-4 | - | - | - | - | - | 0.25 | 0.50 | 0.50 | - | - | - |
| Curative-5 | - | - | - | - | - | - | - | - | 0.25 | 0.50 | 1.00 |
| Total | 100.00 | 100.75 | 101.00 | 100.37 | 101.00 | 100.25 | 100.50 | 101.00 | 100.25 | 100.50 | 101.00 |
| **Properties** | | | | | | | | | | | |
| Expansion @155°C, [%] | 335 | 569 | 514 | 580 | 501 | 420 | 420 | 425 | 400 | 484 | 377 |
| Expansion @195°C, [%] | 651 | 876 | 830 | 1123 | 971 | 769 | 1005 | 856 | 1002 | 1015 | 969 |
| Water uptake @155°C, [wt.-%] | 8.5 | 3.4 | 2.8 | 8.2 | 2.7 | 3.2 | 2.6 | 2.5 | 7.1 | 6.1 | 5.0 |
| Water uptake@195°C, [wt.-%] | 10.0 | 4.4 | 2.5 | 10.5 | 4.2 | 4.0 | 3.6 | 2.5 | 7.0 | 13.3 | 7.6 |

Table 3

| Compositions [pbw] | Ex-11 | Ex-12 | Ex-13 | Ex-14 |
|---|---|---|---|---|
| Polymer **TP1** | - | - | - | - |
| Polymer **TP2** | - | - | - | - |
| Polymer **EP1** | - | - | - | - |
| Polymer **EP2** | 77.44 | 77.44 | 77.44 | 77.44 |
| Polymer **AP** | - | - | - | - |
| Filler | 7.00 | 7.00 | 7.00 | 7.00 |
| Blowing agent | 15.00 | 15.00 | 15.00 | 15.00 |
| Curative-1 | - | - | - | - |
| Curative-2 | - | - | - | - |
| Curative-3 | - | - | - | - |
| Curative-4 | 2.00 | 5.00 | - | - |
| Curative-5 | - | - | 2.00 | 5.00 |
| Total | 101.44 | 104.44 | 101.44 | 104.44 |
| **Properties** | | | | |
| Expansion @155°C, [%] | 212 | 184 | 235 | 202 |
| Expansion @195°C, [%] | 695 | 507 | 605 | 434 |
| Water uptake @155°C, [wt.-%] | 4.90 | 5.60 | 4.50 | 6.10 |
| Water uptake@195°C, [wt.-%] | 6.90 | 6.70 | 6.40 | 7.80 |

## Claims

**1.** A thermally expandable composition comprising:

a) A polymer component **P** comprising:

a1) At least one epoxy-functional polymer **EP,**
a2) Optionally at least one acid anhydride-functional polymer **AP,** and
a3) Optionally at least one thermoplastic polymer **TP,**

b) At least one chemical blowing agent **BA,** and
c) At least one dihydrazide **DH,** wherein the at least one epoxy-functional polymer **EP** comprises at least one olefin glycidyl (meth)acrylate copolymer **EP1** and/or at least one olefin alkyl acrylate glycidyl (meth)acrylate terpolymer **EP2** and/or at least one glycidyl (meth)acrylate grafted (co)polymer **EP3.**

**2.** The thermally expandable composition according to claim 1, wherein the polymer component P comprises at least 45 wt.-%, preferably at least 55 wt.-%, of the total weight of the thermally expandable composition and/or wherein the at least one chemical blowing agent **BA** comprises 1 - 35 wt.-%, preferably 2.5 - 25 wt.-%, of the total weight of the thermally expandable composition.

**3.** The thermally expandable composition according to claim 1 or 2, wherein the composition is essentially free of organic peroxides, preferably essentially free of peroxides.

**4.** The thermally expandable composition according to any one of previous claims, wherein the at least one chemical blowing agent **BA** is an endothermic chemical blowing agent comprising at least one organic acid, wherein the at least one organic acid is preferably a multifunctional organic acid having at least two acidic functional groups,

preferably at least two carboxylic groups.

**5.** The thermally expandable composition according to claim 4, wherein the at least one organic acid is present in the thermally expandable composition in free acid form.

**6.** The thermally expandable composition according to any one of previous claims, wherein the composition essentially free of sodium and potassium bicarbonates.

**7.** The thermally expandable composition according to one or previous claims, wherein the at least one dihydrazide **DH** is a dihydrazide of formula (I)

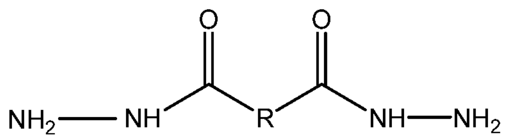

(I)

wherein R represents a monovalent linear or branched alkyl radical having 1 to 18 carbon atoms, an aryl or arylalkyl radical, or an aminoacid backbone.

**8.** The thermally expandable composition according to any one of previous claims, wherein the at least one dihydrazide **DH** is selected from the group consisting of adipic acid dihydrazide (ADH), Icosanedioic acid dihydrazide (LDH), isophthalic dihydrazide (IDH), dodecanedioic dihydrazide (DDH), sebacic acid dihydrazide (SDH), valine dihydrazide (VDH), glutaric dihydrazide (GDH), and pimelic acid dihydrazide (PDH) , preferably from the group consisting of adipic acid dihydrazide (ADH), isophthalic dihydrazide (IDH), dodecanedioic dihydrazide (DDH), and sebacic acid dihydrazide (SDH).

**9.** The thermally expandable composition according to any one of previous claims, wherein the at least one dihydrazide **DH** comprises 0.01 - 10 wt.-%, preferably 0.05 - 7.5 wt.-%, more preferably 0.1 - 7.5 wt.-%, of the total weight of the thermally expandable composition.

**10.** The thermally expandable composition according to any one of previous claims further comprising at least one functional guanidine of formula (II)

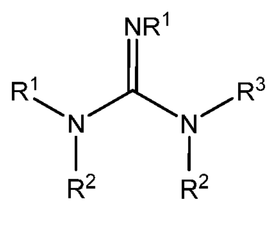

(II)

wherein $R^1$ represents a hydrogen atom or a monovalent linear or branched alkyl radical having 1 to 10 carbon atoms which furthermore optionally comprises a nitrogen atom, a cycloaliphatic radical, or an aryl or aryl alkyl radical;

$R^2$ represents a hydrogen atom or a monovalent linear or branched alkyl radical having 1 to 10 carbon atoms; and $R^3$ represents a hydrogen atom or a monovalent linear or branched alkyl radical having1 to 10 carbon atoms, or a cycloaliphatic radical which furthermore optionally comprises a nitrogen atom and/or an oxygen atom and/or silicon atom.

**11.** The thermally expandable composition according to claim 10, wherein the at least one functional guanidine of formula (II) comprises 0.01 - 5 wt.-%, preferably 0.025 - 4.5 wt.-%, more preferably 0.1 - 3.5 wt.-%, of the total weight of the thermally expandable composition.

**12.** The thermally expandable composition according to any one of previous claims, wherein the at least one acid anhydride-functional polymer **AP** comprises at least one olefin alkyl acrylate maleic anhydride terpolymer **AP1** and/or at least one olefin maleic anhydride copolymer **AP2** and/or at least one maleic anhydride grafted (co)polymer **AP3**.

**13.** Baffle and/or a reinforcement element for hollow structures comprising a thermally expandable composition according to any one of claims 1-12.

**14.** Baffle and/or reinforcement element of claim 13 further comprising a carrier on which the thermally expandable composition is deposited or attached.

**15.** A process for manufacturing a baffle and/or reinforcement element according to claim 14, wherein the thermally expandable composition is injection-molded onto the carrier or co-extruded with the carrier.

**16.** Use of the baffle and/or the reinforcement element according to claim 13 or 14 for sealing, baffling, or reinforcing of a cavity or a hollow structure of a land-, water-, or air-vehicle, preferably an automotive vehicle, and/or a cavity of a building such that the transmission of noise, vibrations, humidity, and/or heat is reduced, and/or the structure surrounding said cavity is mechanically strengthened.

**17.** Method for sealing, baffling and/or reinforcing a cavity or a hollow structure, wherein an element comprising a thermally expandable composition according to any of claims 1-12 is introduced into said cavity or hollow structure and subsequently expanded by heat such that said cavity or hollow structure is at least partially filled by the expanded composition.

## Patentansprüche

**1.** Thermisch expandierbare Zusammensetzung, umfassend:

a) eine Polymerkomponente P, umfassend:

a1) mindestens ein Polymer mit funktionellen Epoxidgruppen EP,
a2) gegebenenfalls mindestens ein Polymer mit funktionellen Säureanhydridgruppen AP, und
a3) gegebenenfalls mindestens ein thermoplastisches Polymer TP,

b) mindestens ein chemisches Treibmittel BA, und
c) mindestens ein Dihydrazid DH, wobei das mindestens eine Polymer mit funktionellen Epoxidgruppen EP mindestens ein Olefin-Glycidyl(meth)acrylat-Copolymer EP1 und/oder mindestens ein Olefin-Alkylacrylat-Glycidyl(meth)acrylat-Terpolymer EP2 und/oder mindestens ein mit Glycidyl(meth)acrylat gepfropftes Copolymer EP3 umfasst.

**2.** Thermisch expandierbare Zusammensetzung nach Anspruch 1, wobei die Polymerkomponente P mindestens 45 Gew.-%, vorzugsweise mindestens 55 Gew.-%, des Gesamtgewichts der thermisch expandierbaren Zusammensetzung umfasst und/oder wobei das mindestens eine chemische Treibmittel BA 1 bis 35 Gew.-%, vorzugsweise 2,5 bis 25 Gew.-%, des Gesamtgewichts der thermisch expandierbaren Zusammensetzung umfasst.

**3.** Thermisch expandierbare Zusammensetzung nach Anspruch 1 oder 2, wobei die Zusammensetzung im Wesentlichen keine organischen Peroxide umfasst, vorzugsweise im Wesentlichen keine Peroxide umfasst.

**4.** Thermisch expandierbare Zusammensetzung nach einem der vorhergehenden Ansprüche, wobei das mindestens eine chemische Treibmittel BA ein endothermes chemisches Treibmittel ist, das mindestens eine organische Säure umfasst, wobei die mindestens eine organische Säure vorzugsweise eine mehrfunktionelle organische Säure mit mindestens zwei säurefunktionellen Gruppen, vorzugsweise mindestens zwei Carbonsäuregruppen, ist.

**5.** Thermisch expandierbare Zusammensetzung nach Anspruch 4, wobei die mindestens eine organische Säure in der thermisch expandierbaren Zusammensetzung in Form der freien Säure vorliegt.

**6.** Thermisch expandierbare Zusammensetzung nach einem der vorhergehenden Ansprüche, wobei die Zusammensetzung im Wesentlichen keine Natrium- und Kaliumbicarbonate umfasst.

**7.** Thermisch expandierbare Zusammensetzung nach einem der vorhergehenden Ansprüche, wobei das mindestens eine Dihydrazid DH ein Dihydrazid mit der Formel (I):

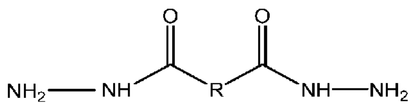

(I)

ist, wobei R einen einwertigen unverzweigten oder verzweigten Alkylrest mit 1 bis 18 Kohlenstoffatomen, einen Aryl- oder Arylalkylrest oder eine Aminosäure-Hauptkette darstellt.

**8.** Thermisch expandierbare Zusammensetzung nach einem der vorhergehenden Ansprüche, wobei das mindestens eine Dihydrazid DH aus der Gruppe bestehend aus Adipinsäuredihydrazid (ADH), Octadecandisäuredihydrazid (LDH), Isophthalsäuredihydrazid (IDH), Dodecandisäuredihydrazid (DDH), Sebacinsäuredihydrazid (SDH), Valinsäuredihydrazid (VDH), Glutarsäuredihydrazid (GDH) und Pimelinsäuredihydrazid (PDH) ausgewählt ist, vorzugsweise aus der Gruppe bestehend aus Adipinsäuredihydrazid (ADH), Isophthalsäuredihydrazid (IDH), Dodecandisäuredihydrazid (DDH) und Sebacinsäuredihydrazid (SDH).

**9.** Thermisch expandierbare Zusammensetzung nach einem der vorhergehenden Ansprüche, wobei das mindestens eine Dihydrazid DH 0,01 bis 10 Gew.-%, vorzugsweise 0,05 bis 7,5 Gew.-%, bevorzugter 0,1 bis 7,5 Gew.-%, des Gesamtgewichts der thermisch expandierbaren Zusammensetzung umfasst.

**10.** Thermisch expandierbare Zusammensetzung nach einem der vorhergehenden Ansprüche, ferner umfassend mindestens ein funktionelles Guanidin mit der Formel (II) :

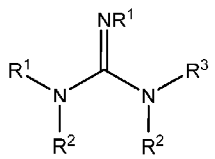

(II)

in der $R^1$ ein Wasserstoffatom oder einen einwertigen unverzweigten oder verzweigten Alkylrest mit 1 bis 10 Kohlenstoffatomen, der ferner gegebenenfalls ein Stickstoffatom umfasst, einen cycloaliphatischen Rest oder einen Aryl- oder Arylalkylrest darstellt;

$R^2$ ein Wasserstoffatom oder einen einwertigen unverzweigten oder verzweigten Alkylrest mit 1 bis 10 Kohlenstoffatomen darstellt; und
$R^3$ ein Wasserstoffatom oder einen einwertigen unverzweigten oder verzweigten Alkylrest mit 1 bis 10 Kohlenstoffatomen oder einen cycloaliphatischen Rest darstellt, der ferner gegebenenfalls ein Stickstoffatom und/oder ein Sauerstoffatom und/oder Siliciumatom umfasst.

**11.** Thermisch expandierbare Zusammensetzung nach Anspruch 10, wobei das mindestens eine funktionelle Guanidin mit der Formel (II) 0,01 bis 5 Gew.-%, vorzugsweise 0,025 bis 4,5 Gew.-%, bevorzugter 0,1 bis 3,5 Gew.-%, des Gesamtgewichts der thermisch expandierbaren Zusammensetzung umfasst.

**12.** Thermisch expandierbare Zusammensetzung nach einem der vorhergehenden Ansprüche, wobei das mindestens eine Polymer mit funktionellen Säureanhydridgruppen AP mindestens ein Olefin-Alkylacrylat-Maleinsäureanhydrid-Terpolymer AP1 und/oder mindestens ein Olefin-Maleinsäureanhydrid-Copolymer AP2 und/oder mindestens ein mit Maleinsäureanhydrid gepfropftes Copolymer AP3 umfasst.

**13.** Schott- und/oder Verstärkungselement für Hohlstrukturen, das eine thermisch expandierbare Zusammensetzung nach einem der Ansprüche 1 bis 12 umfasst.

**14.** Schott- und/oder Verstärkungselement nach Anspruch 13, das ferner einen Träger umfasst, an dem die thermisch expandierbare Zusammensetzung aufgebracht oder befestigt ist.

**15.** Verfahren zum Herstellen eines Schott- und/oder Verstärkungselements nach Anspruch 14, wobei die thermisch expandierbare Zusammensetzung auf den Träger spritzgegossen wird oder mit dem Träger coextrudiert wird.

**16.** Verwendung des Schott- und/oder Verstärkungselements nach Anspruch 13 oder 14 zum Abdichten, Abschließen oder Verstärken eines Hohlraums oder einer Hohlstruktur eines Land-, Wasser- oder Luftfahrzeugs, vorzugsweise

eines Kraftfahrzeugs, und/oder eines Hohlraums eines Gebäudes derart, dass die Übertragung von Schall, Schwingungen, Feuchtigkeit und/oder Wärme vermindert wird und/oder die den Hohlraum umgebene Struktur mechanisch verstärkt wird.

**17.** Verfahren zum Abdichten, Abschließen und/oder Verstärken eines Hohlraums oder einer Hohlstruktur, wobei ein Element, das eine thermisch expandierbare Zusammensetzung nach einem der Ansprüche 1- 12 umfasst, in den Hohlraum oder die Hohlstruktur eingebracht und anschließend derart mit Wärme expandiert wird, dass der Hohlraum oder die Hohlstruktur zumindest teilweise mit der expandierten Zusammensetzung gefüllt wird.

**Revendications**

**1.** Composition expansible thermiquement comprenant :

a) un composant P de type polymère comprenant :

a1) au moins un polymère EP fonctionnalisé par époxy,
a2) éventuellement au moins un polymère AP fonctionnalisé par anhydride d'acide, et
a3) éventuellement au moins un polymère thermoplastique TP,

b) au moins un agent de gonflement chimique BA, et
c) au moins un dihydrazide DH, l'au moins un polymère EP fonctionnalisé par époxy comprenant au moins un copolymère EP1 d'oléfine-(méth)acrylate de glycidyle et/ou au moins un terpolymère EP2 d'oléfine-acrylate d'alkyle-(méth)acrylate de glycidyle et/ou au moins un (co)polymère EP3 greffé avec un (méth)acrylate de glycidyle.

**2.** Composition expansible thermiquement selon la revendication 1, le composant P de type polymère représentant au moins 45 % en poids, préférablement au moins 55 % en poids, du poids total de la composition expansible thermiquement et/ou l'au moins un agent de gonflement chimique BA représentant 1 à 35 % en poids, préférablement 2,5 à 25 % en poids, du poids total de la composition expansible thermiquement.

**3.** Composition expansible thermiquement selon la revendication 1 ou 2, la composition étant essentiellement exempte de peroxydes organiques, préférablement essentiellement exempte de peroxydes.

**4.** Composition expansible thermiquement selon l'une quelconque des revendications précédentes, l'au moins un agent de gonflement chimique BA étant un agent de gonflement chimique endotherme comprenant au moins un acide organique, l'au moins un acide organique étant préférablement un acide organique multifonctionnel possédant au moins deux groupes fonctionnels acides, préférablement au moins deux groupes carboxyliques.

**5.** Composition expansible thermiquement selon la revendication 4, l'au moins un acide organique étant présent dans la composition expansible thermiquement sous forme d'acide libre.

**6.** Composition expansible thermiquement selon l'une quelconque des revendications précédentes, la composition étant essentiellement exempte de bicarbonates de sodium et de potassium.

**7.** Composition expansible thermiquement selon l'une quelconque des revendications précédentes, l'au moins un dihydrazide DH étant un dihydrazide de formule (I)

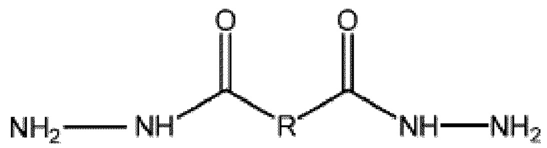

(I)

R représentant un radical alkyle monovalent linéaire ou ramifié possédant 1 à 18 atomes de carbone, un radical aryle ou arylalkyle, ou un squelette d'acide aminé.

**8.** Composition expansible thermiquement selon l'une quelconque des revendications précédentes, l'au moins un

dihydrazide DH étant choisi dans le groupe constitué par le dihydrazide d'acide adipique (ADH), le dihydrazide d'acide icosanedioïque (LDH), le dihydrazide isophtalique (IDH), le dihydrazide dodécanedioïque (DDH), le dihydrazide d'acide sébacique (SDH), le dihydrazide de valine (VDH), le dihydrazide glutarique (GDH), et le dihydrazide d'acide pimélique (PDH), préférablement dans le groupe constitué par le dihydrazide d'acide adipique (ADH), le dihydrazide isophtalique (IDH), le dihydrazide dodécanedioïque (DDH) et le dihydrazide d'acide sébacique (SDH).

**9.** Composition expansible thermiquement selon l'une quelconque des revendications précédentes, l'au moins un dihydrazide DH représentant 0,01 à 10 % en poids, préférablement 0,05 à 7,5 % en poids, plus préférablement 0,1 à 7,5 % en poids, du poids total de la composition expansible thermiquement.

**10.** Composition expansible thermiquement selon l'une quelconque des revendications précédentes comprenant en outre au moins une guanidine fonctionnelle de formule (II)

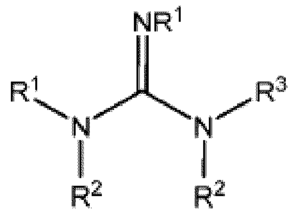

(II)

$R^1$ représentant un atome d'hydrogène ou un radical alkyle monovalent linéaire ou ramifié possédant 1 à 10 atomes de carbone qui comprend éventuellement par ailleurs un atome d'azote, un radical cycloaliphatique, ou un radical aryle ou arylalkyle ;

$R^2$ représentant un atome d'hydrogène ou un radical alkyle monovalent linéaire ou ramifié possédant 1 à 10 atomes de carbone ; et
$R^3$ représentant un atome d'hydrogène ou un radical alkyle monovalent linéaire ou ramifié possédant 1 à 10 atomes de carbone, ou un radical cycloaliphatique qui comprend éventuellement par ailleurs un atome d'azote et/ou un atome d'oxygène et/ou un atome de silicium.

**11.** Composition expansible thermiquement selon la revendication 10, l'au moins une guanidine fonctionnelle de formule (II) représentant 0,01 à 5 % en poids, préférablement 0,025 à 4,5 % en poids, plus préférablement 0,1 à 3,5 % en poids, du poids total de la composition expansible thermiquement.

**12.** Composition expansible thermiquement selon l'une quelconque des revendications précédentes, l'au moins un polymère AP fonctionnalisé par anhydride d'acide comprenant au moins un terpolymère AP1 d'oléfine-acrylate d'alkyle-anhydride maléique et/ou au moins un copolymère AP2 d'oléfine-anhydride maléique et/ou au moins un (co)polymère AP3 greffé avec de l'anhydride maléique.

**13.** Cloison et/ou élément de renforcement pour des structures creuses comprenant une composition expansible thermiquement selon l'une quelconque des revendications 1 à 12.

**14.** Cloison et/ou élément de renforcement selon la revendication 13 comprenant en outre un support sur lequel la composition expansible thermiquement est déposée ou fixée.

**15.** Procédé pour la fabrication d'une cloison et/ou d'un élément de renforcement selon la revendication 14, la composition expansible thermiquement étant moulée par injection sur le support ou co-extrudée avec le support.

**16.** Utilisation de la cloison et/ou de l'élément de renforcement selon la revendication 13 ou 14 pour l'étanchéification, le cloisonnement ou le renforcement d'une cavité ou d'une structure creuse d'un véhicule terrestre, aquatique ou aérien, préférablement d'un véhicule automobile, et/ou d'une cavité d'un bâtiment de sorte que la transmission du bruit, de vibrations, de l'humidité et/ou de la chaleur soit réduite, et/ou la structure entourant ladite cavité étant renforcée mécaniquement.

**17.** Procédé pour l'étanchéification, le cloisonnement et/ou le renforcement d'une cavité ou d'une structure creuse, un élément comprenant une composition expansible thermiquement selon l'une quelconque des revendications 1 à 12 étant introduit dans ladite cavité ou structure creuse et subséquemment expansé par de la chaleur de sorte que

ladite cavité ou structure creuse soit au moins partiellement remplie par la composition expansée.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- DE 102011080223 A1
- US 2018215888 A1